# FASCICULE DE BREVET EUROPEEN

(11) **EP 2 632 830 B1**
(45) Date de publication et mention de la délivrance du brevet: **08.06.2016**
(21) Numéro de dépôt: 11831833.6
(22) Date de dépôt: 27.10.2011
(51) Int. Cl.: B65G 51/01, A23N 12/02, B65B 25/04, B07C 5/38

(54) **DISPOSITIF DE GROUPAGE EN LOTS D'OBJETS FLOTTANTS À POUSSOIR MOTORISÉ DE SUPERPOSITION DES OBJETS**
VORRICHTUNG ZUM GRUPPIEREN SCHWIMMENDER OBJEKTE IN BÜNDELN MIT EINEM MOTORGETRIEBENEN SCHIEBEELEMENT ZUM STAPELN DER OBJEKTE
DEVICE FOR GROUPING FLOATING OBJECTS INTO BATCHES, HAVING A MOTOR-DRIVEN PUSH MEMBER FOR STACKING THE OBJECTS

(30) Priorité: 29.10.2010 FR 1004263
(43) Date de publication de la demande: 04.09.2013
(73) Titulaire: MAF Agrobotic, 82000 Montauban (FR)
(72) Inventeur: BLANC, Stéphane, F-82710 Bressols (FR)
(74) Mandataire: Cabinet BARRE LAFORGUE & associés
(86) Numéro de dépôt international: PCT/FR2011/052522
(87) Numéro de publication internationale: WO 2012/056186

(56) Documents cités:
- EP-A1- 0 670 276
- EP-A1- 0 729 908
- FR-A- 1 511 134
- FR-A1- 2 175 630
- FR-A1- 2 808 706
- US-A- 2 159 619
- US-A- 4 009 726

## Description

L'invention concerne un dispositif de groupage en lots d'objets flottants fragiles, notamment des fruits (pommes, tomates,...) flottants ou autres, du type comprenant :
- une pluralité de canaux, dits canaux d'accumulation, reliés à un dispositif d'alimentation en courant hydraulique adapté pour former, dans chaque canal d'accumulation, un courant hydraulique apte à transporter les objets flottants le long du canal d'accumulation, chaque canal d'accumulation étant doté, à une extrémité aval de ce dernier, d'un dispositif de retenue/libération des objets qu'il contient,
- un dispositif d'alimentation sélective d'une portion amont de chaque canal d'accumulation en objets,
et dans lequel :
- chaque canal d'accumulation présente, au moins dans une portion aval de ce dernier, dite zone de superposition, une hauteur supérieure à deux fois l'encombrement vertical maximum de chaque objet de façon à pouvoir recevoir plusieurs couches d'objets,
- chaque canal d'accumulation est doté d'un dispositif, dit dispositif d'empilement, apte à empiler les objets en plusieurs couches dans la zone de superposition.

Dans tout le texte, on désigne par « objet flottant » tout objet présentant une flottaison suffisante dans un courant de liquide pour pouvoir être transporté par ce dernier. En conséquence, cette terminologie couvre non seulement les objets flottants en surface du courant liquide, mais également en particulier les objets situés entre deux eaux.

On connaît déjà (cf. par exemple EP 0729908) un tel dispositif, qui permet en particulier de réduire la longueur totale de chaque canal d'accumulation, et donc l'espace requis pour les canaux d'accumulation. Le dispositif décrit dans ce document est néanmoins extrêmement complexe et coûteux. En outre, il induit des manipulations simultanées des lots d'objets et, au cours de ces manipulations, des risques d'endommagement de ces objets qui sont en général fragiles. À cet égard, il est à noter en particulier que le transport hydraulique des objets est précisément utilisé pour éviter d'endommager les objets.

En outre, FR 2808706 décrit aussi un tel dispositif selon le préambule de la revendication 1, dans lequel des moyens de stockage temporaire comportent d'une part un ensemble de parois verticales immergées, dont des panneaux mobiles et articulés, formant un contour fermé délimitant l'espace de stockage temporaire des fruits sur plusieurs couches superposées et, d'autre part, une manche d'immersion forcée de chaque fruit issu du convoyeur dans l'espace délimité par le contour fermé. La manche d'immersion est inclinée avec une extrémité d'entrée qui s'étend dans la zone de réception des fruits et une autre extrémité de sortie dirigée vers le fond du bassin et s'ouvrant au-dessous du niveau de l'extrémité inférieure du panneau. Ces moyens d'immersion sont complexes, peu fiables, et entraînent nécessairement des chocs entre les objets et la manche d'immersion, et entre les objets eux-mêmes, qui sont fragiles, et donc la détérioration de ces objets.

L'invention vise donc à pallier ces inconvénients. À cet effet, elle vise à proposer un dispositif de groupage dans lequel le dispositif d'empilement est simple à la fabrication, à l'installation et à l'entretien, peu coûteux, efficace, et ne risque pas d'endommager les objets.

Dans tout le texte, les termes « amont » et « aval » sont utilisés en référence au sens de circulation des objets dans le dispositif de groupage, correspondant également au sens de circulation du courant hydraulique transportant ces objets.
L'invention concerne donc un dispositif selon la revendication 1.

Les inventeurs ont en effet constaté qu'un simple poussoir motorisé qui repousse les objets vers l'aval sur une distance limitée, notamment lorsque ces derniers forment déjà une première couche complète dans la zone de superposition, entraîne spontanément un empilement des objets, certains d'entre eux étant repoussés vers le fond du canal de ce simple fait. Ce phénomène se produit par contact direct des objets entre eux, mais sans choc. Il est en outre possible d'ajuster la vitesse et la course de déplacement du poussoir motorisé de telle sorte que l'immersion des objets vers le fond s'effectue en douceur. Il est à noter à ce titre que la vitesse du poussoir motorisé n'a pas à être dépendante de celle du débit hydraulique dans le canal. En effet, lorsque la superposition est effectuée, les objets sont à l'arrêt dans la zone de superposition, contre le dispositif de retenue/libération qui est alors fermé. Le dispositif selon l'invention permet donc de réaliser des lots dans la zone de superposition comprenant plusieurs couches empilées les unes sur les autres comprenant plusieurs couches empilées les unes sur les autres entre le poussoir motorisé et le dispositif de retenue/libération.

La distance de déplacement vers l'aval des objets par le poussoir motorisé est ajustée au cas par cas de façon à obtenir une superposition effective et optimale des objets dans la zone de superposition. Avantageusement et selon l'invention chaque poussoir motorisé est adapté pour déplacer les objets vers l'aval sur une distance inférieure à la longueur de la zone de superposition.

Selon l'invention, chaque poussoir motorisé est adapté pour déplacer les objets vers l'aval sur une distance inférieure à la moitié de la distance qui le sépare du dispositif de retenue/libération.

Par ailleurs, avantageusement et selon l'invention, chaque poussoir motorisé est adapté pour être entraîné, en permanence et/ou sur commande d'un dispositif de détection de la présence d'objets en une zone située en amont du poussoir, alternativement vers l'aval dans le canal d'accumulation à partir d'une position initiale amont sur une course prédéterminée de déplacement des objets, et hors du canal d'accumulation vers l'amont pour revenir à ladite position initiale amont. Pour ce faire, plusieurs modes de réalisation sont possibles. Par exemple, le poussoir motorisé peut être formé d'une brosse ou d'une grille montée rotative autour d'un axe ou portée par un convoyeur à boucle sans fin disposé au-dessus du canal d'accumulation. Néanmoins, dans un mode de réalisation préférentiel et selon l'invention, chaque poussoir motorisé est guidé en translation longitudinale par rapport au canal d'accumulation et entraîné alternativement vers l'amont et vers l'aval en translation.

De préférence, avantageusement et selon l'invention, le dispositif de retenue/libération et le poussoir motorisé sont transparents au débit hydraulique circulant dans le canal d'accumulation, c'est-à-dire laisse s'écouler le flux hydraulique au moins sensiblement librement. Cela étant, il est possible de prévoir que le poussoir motorisé ne soit pas strictement transparent au débit hydraulique, notamment s'il est entraîné en déplacement à une vitesse similaire à celle du débit hydraulique dans le canal d'accumulation.

Selon l'invention, le dispositif d'empilement comprend un poussoir motorisé comprenant une grille transversale montée sur un chariot guidé en déplacement au-dessus du canal d'accumulation, un dispositif d'entraînement longitudinal de ce chariot (en permanence et/ou sur commande dudit dispositif de détection) alternativement vers l'aval sur ladite distance, et vers l'amont sur la même distance, et un dispositif d'entraînement de la grille transversale entre une position abaissée dans le canal d'accumulation dans laquelle elle est susceptible de repousser les objets vers l'aval, et une position surélevée au-dessus du canal d'accumulation.

Par ailleurs, avantageusement, un dispositif selon l'invention, comprend une unité de commande adaptée pour commander l'activation du poussoir motorisé au moins lorsque le dispositif de retenue/libération est en position de fermeture dans laquelle il retient les objets à l'extrémité aval du canal d'accumulation, et tant que le nombre d'objets dans la zone de superposition est inférieur ou égal à un nombre prédéterminé d'objets correspondant à un lot comprenant plusieurs couches empilées les unes sur les autres entre le poussoir motorisé et le dispositif de retenue/libération.

Avantageusement et selon l'invention, l'unité de commande est adaptée pour arrêter le poussoir motorisé en position extrême aval dans le canal d'accumulation, et pour commander un déplacement du poussoir motorisé vers l'amont en vue d'un nouveau cycle de déplacement sur réception d'un signal de détection de la présence d'objets en une zone, dite zone de détection, du canal d'accumulation à l'amont de ladite position extrême aval. Avantageusement et selon l'invention ladite zone de détection correspond au moins sensiblement à une position extrême amont du poussoir motorisé pour laquelle il pénètre dans le canal d'accumulation et commence à coopérer avec les objets et à les déplacer vers l'aval. Ledit signal de détection peut être délivré par tout dispositif de détection tel qu'une cellule photoélectrique disposé au niveau de ladite zone de détection.

Avantageusement et selon l'invention, ladite unité de commande est également adaptée pour commander le dispositif de retenue/libération vers sa position d'ouverture et vers sa position de fermeture. Il est à noter que le poussoir motorisé selon l'invention peut également être utilisé alors que le dispositif de retenue/libération est en position ouverte. Ainsi, avantageusement et selon l'invention, l'unité de commande est adaptée pour commander l'activation du poussoir motorisé lorsque le dispositif de retenue/libération est en position ouverte, le poussoir permettant d'assister l'évacuation des objets hors du canal d'accumulation, au moins dans sa phase initiale, et de séparer les objets en cours d'évacuation de ceux qui arrivent en amont, destinés à former un autre lot.

Avantageusement un dispositif selon l'invention comprend en outre un canal hydraulique, dit canal d'amenée, en communication avec chaque canal d'accumulation de façon à pouvoir recevoir le courant hydraulique et des objets évacués par le dispositif de retenue/libération de ce canal d'accumulation, et au moins un poste de réception de lots de d'objets délivrés par ledit canal d'amenée. Un tel poste de réception peut faire l'objet de diverses variantes de réalisation. Par exemple, il peut comprendre un dispositif pour le remplissage de caisses à claire-voie et/ou de caisses-palettes (généralement désignées « palox »), tel que décrit par exemple par FR 2868042 ou US 7159373, chaque lot étant emballé dans une unique caisse ou palox. En variante, le poste de réception peut être adapté pour transférer chaque lot vers un dispositif de conditionnement individuel ou par groupes des objets du lot.

L'invention permet de rendre un dispositif de groupage particulièrement compact, et ce de façon extrêmement simple et efficace. Elle est tout particulièrement avantageuse dans le cas d'un dispositif de groupage selon l'invention caractérisé en outre en ce que les différents canaux d'accumulation sont parallèles les uns aux autres et en ce que chaque ligne de calibrage du dispositif d'alimentation sélective est au moins sensiblement orthogonal à chaque canal d'accumulation.

Un dispositif de groupage selon l'invention est par exemple applicable à titre d'unité de calibrage de fruits ou légumes, par exemple de pommes ou de poires, le poste de réception permettant de conditionner chaque lot d'objets issus d'un canal d'accumulation dans un même emballage, par exemple une caisse à claire-voie et/ou une caisse-palette généralement désignée «palox», tel que décrit par exemple par FR 2868042 ou US 7159373.

L'invention concerne également un dispositif de groupage d'objets caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une vue schématique de dessus d'un dispositif de groupage conforme à l'état de la technique,
- la figure 2 est une vue schématique de dessus d'un dispositif de groupage conforme à l'invention,
- la figure 3 est une vue schématique en perspective d'un canal d'accumulation d'un dispositif de groupage conforme à l'invention, le dispositif d'empilement étant représenté avec le poussoir motorisé en position surélevée amont, le dispositif de retenue/libération étant fermé,
- la figure 4 est une vue schématique en perspective d'un canal d'accumulation d'un dispositif de groupage conforme à l'invention, le dispositif d'empilement étant représenté avec le poussoir motorisé en position basse aval, le dispositif de retenue/libération étant ouvert,
- la figure 5 est une vue schématique en perspective d'un dispositif d'empilement d'un dispositif de groupage selon l'invention, le poussoir motorisé étant en position surélevée amont,
- la figure 6 est une vue schématique similaire à la figure 5, le poussoir motorisé étant représenté en position abaissée aval.

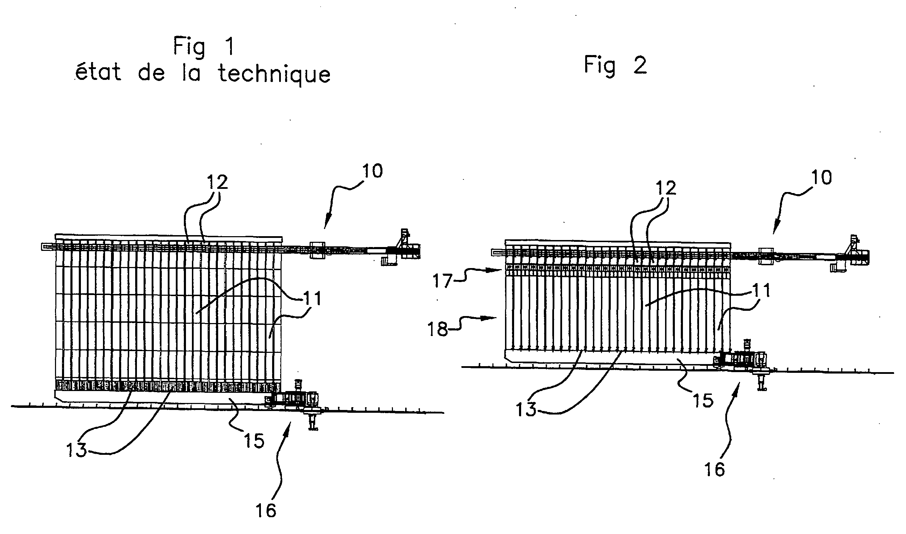

Le dispositif représenté figure 1 est un dispositif conforme à l'état de la technique (cf. par exemple EP 0729908 ou US 7159373) comprenant une ligne 10 de convoyage, d'analyse et de tri des objets en fonction de critères prédéterminés, cette ligne 10, dite ligne 10 de calibrage, étant dotée de moyens de déchargement sélectif (non représentés) des objets dans différents canaux d'accumulation 11 qui s'étendent globalement orthogonalement à la ligne 10 de calibrage, avec une portion d'extrémité amont 12 située sous les moyens de déchargement de la ligne 10 de calibrage. Une telle ligne 10 de calibrage est bien connue en elle-même (cf. par exemple notamment US 5230394, US 5280838, US 5626238, US 6234297...). Elle présente en général différents postes d'analyse des objets (pesage, analyse optique,...). Dans l'exemple représenté figure 1, le dispositif comprend vingt-huit canaux 11 d'accumulation parallèles les uns aux autres et qui se jouxtent latéralement.

Ces canaux 11 d'accumulation sont alimentés et parcourus par un courant hydraulique (en général de l'eau, éventuellement avec des additifs de traitement) généré par un dispositif d'alimentation hydraulique, non représenté, doté de moyens de pompage et de recirculation, tel que décrit par exemple par US 7159373. Le courant hydraulique circule dans les canaux 11 d'accumulation, depuis leur portion amont 12 s'étendant sous les moyens de déchargement de la ligne 10 de calibrage, jusqu'à leur extrémité 13 aval opposée dotée d'un dispositif de retenue/libération permettant, en une position fermée, de retenir les objets dans le canal d'accumulation, et, en position ouverte, de les libérer pour les transférer dans un canal 15 d'amenée.

De préférence, chaque canal 11 d'accumulation est adapté pour pouvoir recevoir un lot d'objets destiné à remplir une unique caisse ou palox, au niveau d'un poste de réception 16 alimenté par le canal 15 d'amenée. Néanmoins, cela n'est pas nécessaire et il reste possible que chaque lot d'objets contenu dans un canal d'accumulation et libéré dans le canal 15 d'amenée fasse l'objet d'un autre traitement au niveau du poste de réception 16 ou de plusieurs postes de réception. Quoi qu'il en soit, chaque canal 11 d'accumulation présente une longueur suffisante pour pouvoir recevoir tous les objets d'un même lot, devant faire l'objet d'un même traitement ultérieur. En pratique, chaque canal de 11 d'accumulation reçoit des objets présentant des caractéristiques spécifiques vis-à-vis des critères de sélection, par exemple un calibre prédéterminé lorsque les objets sont des fruits. Dans un même lot, tous les objets présentent donc les mêmes caractéristiques, notamment le même calibre.

Sur les figures, ni le courant hydraulique, ni les objets transportés et groupés ne sont représentés, et ce à des fins d'illustration.

La figure 2 représente un dispositif de groupage selon l'invention, dans lequel chaque canal 11 d'accumulation est doté d'un dispositif 17 d'empilement permettant d'entraîner une superposition des objets en plusieurs couches dans le courant hydraulique du canal 11 d'accumulation, et ce dans une portion du canal d'accumulation, dite zone 18 de superposition, qui est située à l'aval de ce dispositif 17 d'empilement. Cette zone 18 de superposition doit présenter une longueur aussi grande que possible vis-à-vis de la longueur totale du canal 11 d'accumulation entre sa portion amont 12 et son extrémité aval 13. Pour cette raison, le dispositif 17 d'empilement est disposé le plus en amont possible dans le canal 11 d'accumulation, immédiatement à l'aval de la portion amont 12 recevant les objets déchargés par la ligne 10 de calibrage. Dans l'exemple représenté figure 2, le dispositif de groupage selon l'invention comprend aussi une ligne 10 de calibrage, un dispositif d'alimentation hydraulique, un canal 15 d'amenée, et un poste 16 de réception, de façon connue en soi, tel que mentionné ci-dessus en référence à la figure 1.

La figure 2 représente un dispositif de groupage selon l'invention qui présente les mêmes capacités que celui de la figure 1, à savoir vingt-huit canaux d'accumulation, chaque canal 11 d'accumulation étant susceptible de recevoir le même nombre d'objets. Comme on le voit, la longueur totale de chaque canal 11 d'accumulation peut être grandement réduite, au bénéfice d'une compacité beaucoup plus importante de l'ensemble de l'installation.

L'ensemble du dispositif de groupage selon l'invention est piloté par une unité de commande (automate), non représentée, en général formée d'un système informatique, adapté pour commander les différents actionneurs et moteurs de l'ensemble de l'installation, notamment la ligne 10 de calibrage, les moyens de déchargement, les dispositifs 14 de retenue/libération des canaux 11 d'accumulation, le poste 16 de réception, le dispositif d'alimentation hydraulique... Cette unité de commande est également adaptée pour commander les différents dispositifs 17 d'empilement. Elle reçoit aussi différents signaux issus de différents capteurs ou détecteurs.

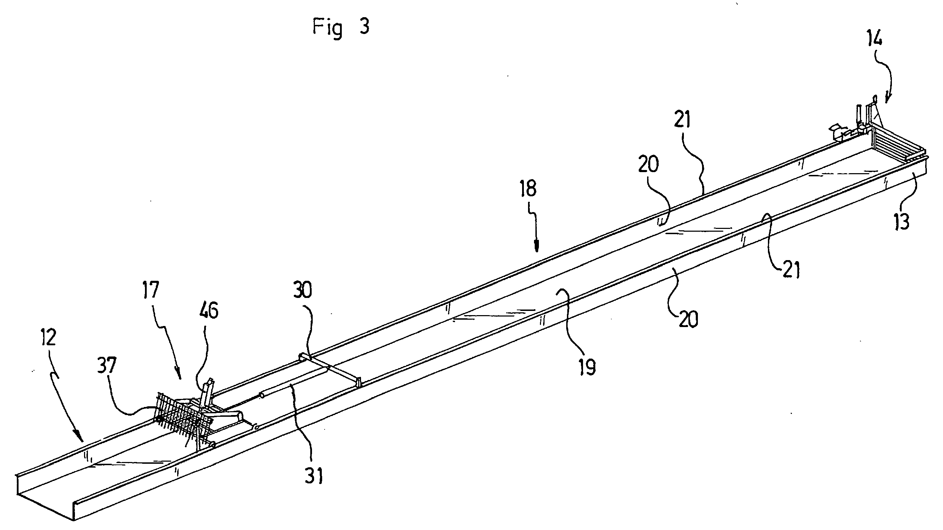

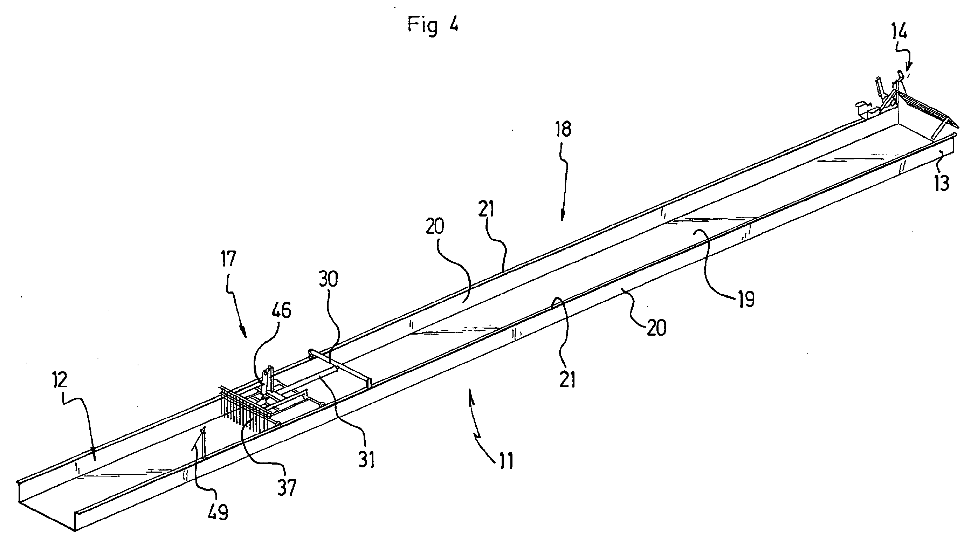

Les figures 3 et 4 représentent un canal 11 d'accumulation, globalement formé d'un profilé comprenant un fond 19 horizontal longitudinal, et deux parois latérales verticales 20 dont les bords supérieurs sont repliés vers l'extérieur pour former des bandes 21 supérieures horizontales s'étendant le long du canal 11 d'accumulation. Un dispositif 17 d'empilement est disposé au-dessus du canal 11 d'accumulation, immédiatement à l'aval de la portion amont 12 de ce dernier recevant les objets déchargés par la ligne 10 de calibrage.

Dans l'exemple représenté, le fond 19 du canal 11 d'accumulation est horizontal et les parois latérales verticales 20 sont de hauteur uniforme sur toute la longueur du canal 11 d'accumulation. Rien n'empêche cependant de prévoir que le canal 11 d'accumulation présente une hauteur variable, de préférence augmentant vers l'aval, pour faciliter la superposition des objets dans la zone 18 de superposition à l'aval du dispositif 17 d'empilement. Quoi qu'il en soit, au moins dans la zone 18 de superposition, la hauteur totale du canal 11 d'accumulation est supérieure à deux fois l'encombrement vertical maximum de chaque objet, et est adaptée pour permettre la superposition verticale d'au moins deux objets l'un au-dessus de l'autre dans le courant hydraulique formé dans le canal 11 d'accumulation, de préférence avec un jeu entre les objets formant la couche la plus basse dans le courant hydraulique, et le fond 19, de façon à éviter le contact des objets avec le fond 19 et à permettre une libre circulation du courant hydraulique dans le canal 11 d'accumulation.

Plus exactement, la hauteur totale du canal 11 d'accumulation est, au moins dans la zone 18 de superposition, adaptée pour permettre la superposition des objets les uns au-dessus des autres, selon le nombre de couches d'objets souhaité dans cette zone 18 de superposition, et ce avec un jeu suffisant maintenu entre les objets et le fond 19. Ainsi, si l'on souhaite former au moins trois couches, la hauteur du courant hydraulique formé dans le canal 11 d'accumulation doit être suffisante pour pouvoir recevoir ces trois couches, avec un jeu tel que susmentionné.

Le dispositif 17 d'empilement comprend, dans le mode de réalisation représenté, une traverse 30 aval fixée rigidement au-dessus du canal 11 d'accumulation, ses deux extrémités étant par exemple boulonnées sur les bandes 21 supérieures horizontales. Un vérin 31 d'entraînement en translation longitudinale prend appui sur la traverse 30, ce vérin 31 présentant un corps de vérin 32 articulé en partie médiane de la traverse 30 et de façon à s'étendre longitudinalement vers l'amont. Ce vérin 31 d'entraînement longitudinal présente une tige 33 d'actionnement dont l'extrémité est articulée à un chariot 34 roulant.

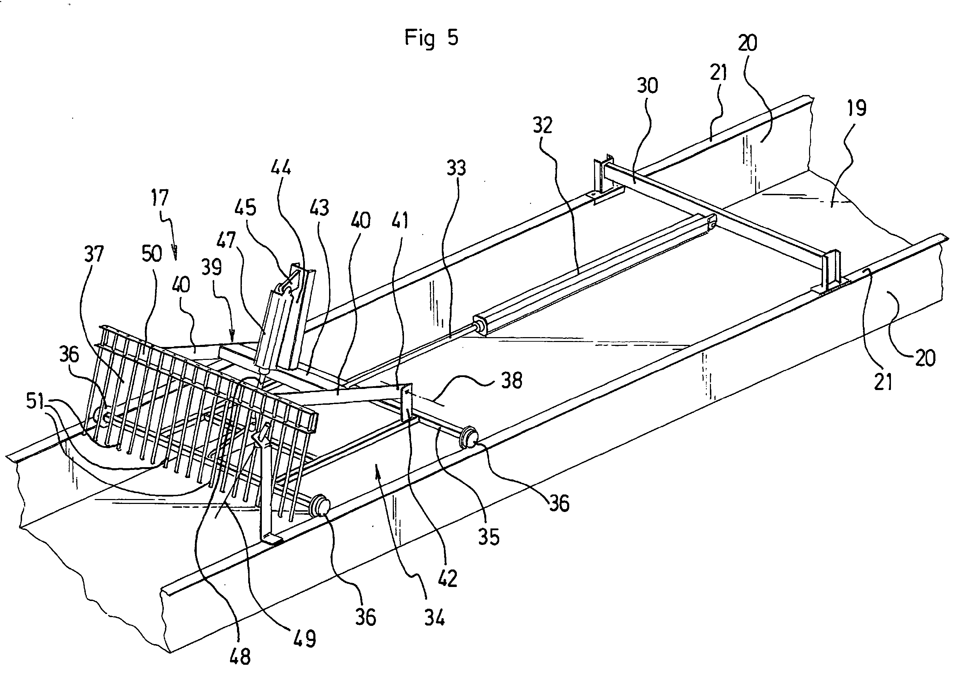

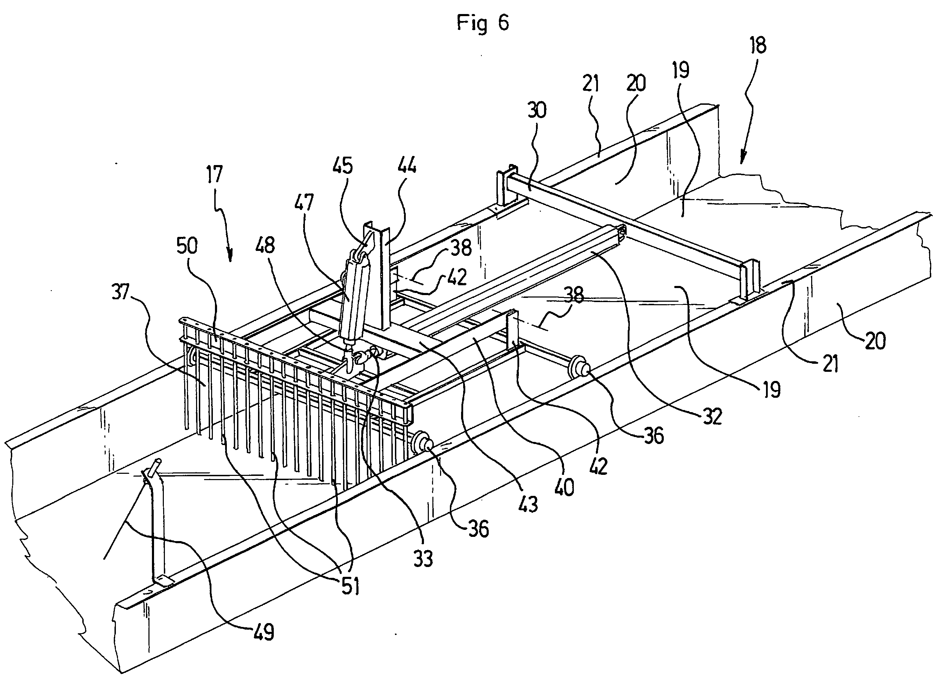

Le chariot 34 comprend un cadre 35 mécano-soudé, par exemple formé de barres métalliques, présentant des longerons et des traverses et doté de quatre roulettes 36 librement rotatives (ou galets glissants), adaptées pour rouler librement (ou glisser) sur les bandes 21 supérieures horizontales du canal 11 d'accumulation. Lorsque la tige 33 d'actionnement du vérin 31 d'entraînement longitudinal est déployée par rapport au corps de vérin 32, le chariot 34 est dans sa position située le plus vers l'amont telle que représentée figures 3 et 5. Lorsque la tige 33 d'actionnement du vérin 31 d'entraînement longitudinal est rétractée dans le corps de vérin 32, le chariot 34 est dans sa position située le plus vers l'aval telle que représentée figures 4 et 6. Grâce aux roulettes 36, le chariot 34 roule librement au-dessus du canal 11 d'accumulation et se déplace en translations longitudinales sous l'effet du vérin 31 d'entraînement longitudinal.

Un poussoir 37 est articulé au chariot 34 selon un axe 38 d'articulation horizontal transversal de façon à pouvoir être placé soit en position surélevée au-dessus du canal 11 d'accumulation (figures 3 et 5) dans laquelle il n'interfère pas avec les objets circulant dans le canal 11 d'accumulation, soit en position abaissée dans le canal 11 d'accumulation (figures 4 et 6) dans laquelle il interfère avec les objets situés dans le courant hydraulique circulant dans le canal 11 d'accumulation. Pour ce faire, le poussoir 37 est porté à l'extrémité amont d'un cadre 39 comprenant deux bras 40 longitudinaux parallèles présentant des extrémités aval 41 articulées sur des pattes verticales 42 solidaires du chariot 34. Le cadre 39 portant le poussoir 37 comprend une traverse 43 portant une potence 44 s'étendant vers le haut et à l'extrémité 45 supérieure de laquelle est articulé le corps 47 d'un vérin 46 de basculement dont la tige 48 d'actionnement est articulée au cadre 35 du chariot 34. De la sorte, lorsque le vérin 46 de basculement est déployé, le poussoir 37 est en position surélevée, et lorsque le vérin 46 de basculement est rétracté, le poussoir 37 est en position abaissée, immédiatement à l'amont du cadre 35 du chariot 34.

L'unité de commande pilote chacun des vérins 31, 46 de telle sorte que le poussoir 37 est entraîné en permanence et /ou sur commande d'une cellule photoélectrique comme décrit ci-après, alternativement, en translations longitudinales, selon des cycles. À partir de la position amont surélevée représentée figures 3 et 5, le poussoir 37 est tout d'abord abaissé par rétraction de la tige d'actionnement du vérin 46 de basculement. Il pénètre donc dans la couche d'objets arrivant à ce niveau dans le canal 11 d'accumulation.

Lors de l'étape subséquente, le vérin 31 d'entraînement longitudinal est rétracté de sorte que le chariot 34, et donc le poussoir 37, sont entraînés en translation longitudinale vers l'aval. De ce fait, le poussoir 37 entraîne et repousse les objets vers l'aval dans la zone 18 de superposition, et ce sur une distance qui correspond à la course de rétraction du vérin 31, jusqu'à arriver dans la position représentée figures 4 et 6 où le poussoir 37 est toujours en position abaissée, en fin de course vers l'aval. À partir de cette position, le vérin 46 de basculement est déployé pour faire monter le poussoir 37 en position surélevée, puis le vérin 31 d'entraînement longitudinal est déployé pour ramener le chariot, et le poussoir 37, dans la position amont initiale représentée sur les figures 3 et 5.

De préférence, un capteur 49 est disposé immédiatement à l'amont du dispositif 17 d'empilement pour détecter la position amont du poussoir 37, de sorte que l'unité de commande reçoit un signal représentatif de cette position. Une cellule photoélectrique est avantageusement associée à ce capteur 49 de façon à détecter la présence d'objets en cette zone amont du canal d'accumulation, et à délivrer un signal correspondant à l'unité de commande.

De préférence, ces mouvements du poussoir 37 sont répétés en permanence et/ou sur commande de la cellule photoélectrique, et au moins tant que le dispositif 14 de retenue/libération situé à l'extrémité aval du canal 11 d'accumulation est en position de fermeture telle que représentée figure 3 et 5. De ce fait, les objets s'accumulent dans la zone 18 de superposition, tout d'abord en formant une seule couche flottant à la surface du courant hydraulique, puis, lorsque cette couche est complète, le poussoir 37 repoussant les objets induit une superposition de ces derniers, certains d'entre eux passant en position immergée pour former une deuxième couche.

De préférence, après un premier déplacement vers l'aval, le poussoir 37 motorisé est arrêté et maintenu en position abaissée et en fin de course vers l'aval. Les objets s'accumulent alors en une couche à l'amont du poussoir 37 en cette position, et lorsque la cellule photoélectrique associée au capteur 49 amont détecte la présence d'objets, l'unité de commande redémarre le cycle pour réitérer une course de déplacement vers la position initiale amont, puis vers l'aval pour superposer des objets. Il est à noter que la cellule photoélectrique de détection de la présence d'objets à l'amont du poussoir 37 n'est pas nécessairement placée strictement au niveau du capteur 49 correspondant à la position extrême amont du poussoir 37 et peut en particulier être placée plus en amont que ce capteur 49 ou même plus vers l'aval.

En variante, le poussoir 37 motorisé est entraîné en permanence sans interruption alternativement vers l'amont et vers l'aval.

Ce fonctionnement peut être maintenu jusqu'à ce que le nombre d'objets formant un lot dans la zone 18 de superposition soit atteint. Ce nombre d'objets est compté par exemple au niveau des moyens de déchargement de la ligne 10 de calibrage, cette dernière étant adaptée pour décharger les objets individuellement. Lorsque le nombre d'objets correspondant à un lot est atteint, le dispositif 14 de retenue/libération peut être ouvert comme représenté figures 4 et 6, et ce si le poste 16 de réception est prêt à recevoir et traiter le lot de ce canal 11 d'accumulation. Les objets sont alors entraînés par le courant hydraulique dans le canal 15 d'amenée.

Le poussoir 37 est de préférence réalisé sous forme d'une grille présentant une traverse supérieure 50 et des doigts 51 s'étendant vers le bas à partir de cette traverse 50, de façon à pénétrer facilement dans le courant hydraulique et entre les objets éventuellement présents dans le courant hydraulique. D'autres formes de réalisation sont néanmoins envisageables, par exemple sous la forme d'une simple plaque, de préférence perforée et/ou de hauteur inférieure à celle du canal 11 d'accumulation pour laisser passer le courant hydraulique.

La vitesse de déplacement du poussoir 37, c'est-à-dire la vitesse de rétraction du vérin 31 entraînement longitudinal peut être ajustée pour optimiser son fonctionnement. En pratique, il est avantageux que cette vitesse soit au moins égale à celle du courant hydraulique, afin que le poussoir 37 ne risque pas de freiner les objets qui arrivent. Néanmoins, cette vitesse est aussi adaptée pour ne pas endommager les objets, notamment lors de la phase de superposition de ces derniers dans la zone 18 de superposition. Avantageusement et selon l'invention le poussoir 37 est entraîné à une vitesse qui correspond au moins sensiblement à celle du courant hydraulique circulant dans le canal 11 d'accumulation. Par exemple, cette vitesse d'entraînement du poussoir 37 est comprise entre 0,2 m/s et 0,4 m/s, notamment de l'ordre de 0,3 m/s.

Dans un dispositif de groupage selon l'invention, le poussoir 37 motorisé ainsi réalisé peut être maintenu en fonctionnement en permanence (et/ou sur commande de la cellule photoélectrique). En variante, il est possible aussi que l'unité de commande désactive le fonctionnement du poussoir 37 dans la première phase de remplissage de la zone 18 de superposition par une première couche d'objets, en le maintenant en position surélevée, et n'active le fonctionnement de ce poussoir 37 motorisé que lorsque le nombre d'objets déchargés dans le canal 11 d'accumulation est supérieur au nombre correspondant à une couche unique d'objets dans la zone 18 de superposition (entre la traverse 30 aval du dispositif 17 d'empilement et le dispositif 14 de retenue/libération). Également, après ouverture du dispositif 14 retenue/libération, le poussoir 37 motorisé est avantageusement maintenu en position abaissée vers l'aval. De ce fait, le dernier mouvement de déplacement vers l'aval du poussoir 37 facilite l'évacuation des objets dans le canal 15 d'amenée, et permet de séparer les nouveaux objets arrivant vers l'amont, formant un nouveau lot, du lot en cours d'évacuation dans le canal 15 d'amenée.

La course de déplacement en translation longitudinale du poussoir 37 motorisé, c'est-à-dire du vérin 31 d'entraînement longitudinal, est relativement faible, notamment inférieure à la moitié de la longueur de la zone 18 de superposition. Cette course de déplacement doit cependant être supérieure à l'encombrement maximum possible dans la direction horizontale d'entraînement d'un objet flottant dans le canal d'accumulation, et de préférence supérieure à deux fois cet encombrement horizontal maximum, de façon à pouvoir entraîner une superposition des objets. En pratique, le dispositif selon l'invention est avantageusement adapté pour entraîner le poussoir 37 motorisé selon une course de déplacement en translation longitudinale comprise entre 50 cm et 100 cm, notamment de l'ordre de 80 cm, c'est-à-dire de l'ordre de 12 fois l'encombrement maximum d'un objet dans la direction horizontale.

Dans le cas où le fonctionnement du poussoir 37 motorisé alternatif est maintenu en permanence, il est avantageusement adapté sur une fréquence correspondant au débit moyen des objets.

Il peut être prévu pour chaque canal d'accumulation, non pas un seul poussoir motorisé, mais au contraire plusieurs poussoirs motorisés entraînés en translations longitudinales alternativement et de façon déphasée les uns par rapport aux autres. Par exemple, plusieurs poussoirs (par exemple sous forme de grilles similaires à celle formant le poussoir 37 représenté sur les figures) peuvent être portés par un même convoyeur à boucle sans fin disposé au-dessus du canal 11 d'accumulation immédiatement à l'amont de la zone 18 de superposition, et/ou s'étendant en regard d'une partie amont de cette dernière. Également, le dispositif 17 d'empilement à poussoir 37 entraîné en translation peut être remplacé par un dispositif d'empilement à poussoir(s) entraîné(s) en rotation. Pour ce faire, une grille ou une pluralité de grilles similaire(s) à celle formant le poussoir 37 représenté sur les figures peut(vent) être montée(s) solidaire(s) d'un même arbre rotatif au-dessus du canal 11 d'accumulation. En outre, la ligne 10 de calibrage peut être remplacée par tout autre dispositif d'alimentation sélective des canaux d'accumulation. Et le canal 15 d'amenée et le poste 16 de réception peuvent être remplacés par tout autre dispositif de traitement des lots d'objets évacués à l'aval des canaux 11 d'accumulation.

## Revendications

1. Dispositif de groupage en lots d'objets flottants fragiles, notamment des fruits flottants, comprenant :
- une pluralité de canaux (11), dits canaux d'accumulation, reliés à un dispositif d'alimentation hydraulique adapté pour former, dans chaque canal d'accumulation, un courant hydraulique apte à transporter les objets flottants le long du canal d'accumulation, chaque canal d'accumulation étant doté, à une extrémité (13) aval de ce dernier, d'un dispositif (14) de retenue/libération des objets qu'il contient,
- un dispositif (10) d'alimentation sélective d'une portion amont de chaque canal d'accumulation en objets, ce dispositif d'alimentation sélective comprenant au moins une ligne, dite ligne (10) de calibrage, de convoyage, d'analyse et de tri des objets en fonction de critères prédéterminés, ladite ligne de calibrage comprenant des moyens de déchargement sélectif des objets dans les différents canaux (11) d'accumulation,
et dans lequel :
- chaque canal d'accumulation présente, au moins dans une portion aval de ce dernier, dite zone (18) de superposition, une hauteur supérieure à deux fois l'encombrement vertical maximum de chaque objet de façon à pouvoir recevoir plusieurs couches d'objets,
- chaque canal (11) d'accumulation est doté d'un dispositif (17), dit dispositif d'empilement, apte à empiler les objets en plusieurs couches dans la zone (18) de superposition,
**caractérisé en ce que** ledit dispositif (17) d'empilement de chaque canal d'accumulation comprend au moins un poussoir (37) motorisé disposé à l'amont de la zone (18) de superposition et apte à entrainer en déplacement vers l'aval les objets arrivant à l'amont de la zone (18) de superposition du canal d'accumulation indépendamment du courant hydraulique et sur une distance inférieure à la distance totale qui le sépare du dispositif (14) de retenue/libération, mais supérieure à un encombrement maximum d'un objet selon la direction horizontale, ledit poussoir (37) comprenant une grille transversale montée sur un chariot (34) guidé en déplacement au-dessus du canal (11) d'accumulation, un dispositif (31) d'entraînement longitudinal de ce chariot (34) alternativement vers l'aval sur ladite distance et vers l'amont sur la même distance, et un dispositif (46) d'entraînement de la grille transversale entre une position abaissée dans le canal d'accumulation dans laquelle elle est susceptible de repousser les objets vers l'aval, et une position surélevée au-dessus du canal d'accumulation, ledit poussoir étant articulé au chariot (34) selon un axe (38) d'articulation horizontal transversal de façon à pouvoir être placé soit en position surélevée au-dessus du canal (11) d'accumulation dans laquelle il n'interfère pas avec les objets circulant dans le canal (11) d'accumulation, soit en position abaissée dans le canal (11) d'accumulation dans laquelle il interfère avec les objets situés dans le courant hydraulique circulant dans le canal (11) d'accumulation, de façon à entraîner une superposition des objets dans la zone de superposition contre le dispositif de retenue/libération fermé.

2. Dispositif selon la revendication 1, **caractérisé en ce que** chaque poussoir (37) motorisé est adapté pour déplacer les objets vers l'aval sur une distance inférieure à la longueur de la zone (18) de superposition.

3. Dispositif selon l'une des revendications 1 ou 2, **caractérisé en ce que** chaque poussoir (37) motorisé est adapté pour déplacer les objets vers l'aval sur une distance inférieure à la moitié de la distance qui le sépare du dispositif (14) de retenue/libération.

4. Dispositif selon l'une des revendications 1 à 3, **caractérisé en ce que** chaque poussoir (37) motorisé est adapté pour être entraîné en permanence alternativement vers l'aval dans le canal d'accumulation à partir d'une position initiale amont sur une course prédéterminée de déplacement des objets, et hors du canal d'accumulation vers l'amont pour revenir à ladite position initiale amont.

5. Dispositif selon l'une des revendications 1 à 4, **caractérisé en ce que** chaque poussoir (37) motorisé est guidé en translation longitudinale par rapport au canal d'accumulation et entraîné alternativement vers l'aval et vers l'amont en translation.

6. Dispositif selon l'une des revendications 1 à 5 , **caractérisé en ce qu'**il comprend une unité de commande adaptée pour commander l'activation du poussoir (37) motorisé au moins lorsque le dispositif (14) de retenue/libération est en position de fermeture dans laquelle il retient les objets à l'extrémité aval du canal (11) d'accumulation, et tant que le nombre d'objets dans la zone (18) de superposition est inférieur ou égal à un nombre prédéterminé d'objets correspondant à un lot comprenant plusieurs couches empilées les unes sur les autres entre le poussoir (37) motorisé et le dispositif (14) de retenue/libération.

7. Dispositif selon la revendication 6, **caractérisé en ce que** l'unité de commande est adaptée pour commander l'activation du poussoir (37) motorisé lorsque le dispositif (14) de retenue/libération est en position ouverte, le poussoir permettant d'assister l'évacuation des objets hors du canal d'accumulation, au moins dans sa phase initiale, et de séparer les objets en cours d'évacuation de ceux qui arrivent en amont, destinés à former un autre lot.

8. Dispositif selon l'une des revendications 1 à 7, **caractérisé en ce qu'**il comprend en outre un canal hydraulique, dit canal (15) d'amenée, en communication avec chaque canal (11) d'accumulation de façon à pouvoir recevoir le courant hydraulique et des objets évacués par le dispositif (14) de retenue/libération de ce canal d'accumulation, et au moins un poste (16) de réception de lots de d'objets délivrés par ledit canal (15) d'amenée.

9. Dispositif selon l'une des revendications 1 à 8, **caractérisé en ce que** les différents canaux (11) d'accumulation sont parallèles les uns aux autres et **en ce que** chaque ligne (10) de calibrage du dispositif d'alimentation sélective est au moins sensiblement orthogonale à chaque canal (11) d'accumulation.

10. Dispositif selon l'une des revendications 1 à 9, **caractérisé en ce que** le dispositif (14) de retenue/libération et le poussoir (37) motorisé sont transparents au débit hydraulique circulant dans le canal (11) d'accumulation.

## Patentansprüche

1. Vorrichtung zum Zusammenstellen einer Charge von empfindlichen schwimmenden Gegenständen, vor allem von schwimmenden Früchten, folgendes umfassend:
- eine Vielzahl von Kanälen (11), die Anhäufungskanäle genannt werden, die mit einer hydraulischen Zuführvorrichtung verbunden sind, die ausgeführt ist, um in jedem Anhäufungskanal eine hydraulische Strömung zu bilden, die imstande ist, die schwimmenden Gegenstände entlang des Anhäufungskanals zu transportieren, wobei jeder Anhäufungskanal an einem stromabwärts befindlichen Ende (13) von letzterem mit einer Vorrichtung (14) zum Zurückhalten/ Freigeben der Gegenände versehen ist, die er enthält,
- eine Vorrichtung (10) zur selektiven Zuführung von Gegenständen in einem stromaufwärts befindlichen Abschnitt eines jeden Anhäufungskanals, wobei diese Vorrichtung zur selektiven Zuführung zumindest eine Reihe umfasst, die Kalibrier-, Beförderungs-, Analyse-und Sortierreihe (10) der Gegenstände in Abhängigkeit von vorbestimmten Kriterien genannt wird, wobei die besagte Kalibrierreihe Mittel zum selektiven Entladen der Gegenstände in die verschiedenen Anhäufungskanäle (11) umfasst,
und wobei:
- jeder Anhäufungskanal zumindest in einem stromabwärts befindlichen Abschnitt von letzterem, der Überlagerungszone (18) genannt wird, eine Höhe aufweist, die größer ist, als der maximale doppelte vertikale Platzbedarf eines jeden Gegenstands, sodass er mehrere Schichten an Gegenständen aufnehmen kann,
- jeder Anhäufungskanal (11) mit einer Vorrichtung (17) versehen ist, die Stapelvorrichtung genannt wird, die imstande ist, die Gegenstände in der Überlagerungszone (18) in mehreren Schichten zu stapeln,
**dadurch gekennzeichnet, dass** die besagte Stapelvorrichtung (17) eines jeden Anhäufungskanals zumindest einen motorisierten Schieber (37) umfasst, der stromaufwärts der Überlagerungszone (18) angeordnet ist und imstande ist, jene Gegenstände, die stromaufwärts der Überlagerungszone (18) des Anhäufungskanals ankommen, unabhängig von der hydraulischen Strömung und über eine Distanz in eine stromabwärts führende Bewegung anzutreiben, die kleiner ist, als die Gesamtdistanz, die ihn von der Vorrichtung (14) zum Zurückhalten/ Freigeben trennt, jedoch größer als ein maximaler Platzbedarf eines Gegenstandes in die horizontale Richtung, wobei der besagte Schieber (37) ein quer verlaufendes Gitter umfasst, das auf einem Wagen (34) montiert ist, der über dem Anhäufungskanal (11) verschiebbar ist, eine Antriebsvorrichtung (31) in Längsrichtung für diesen Wagen (34), abwechselnd stromabwärts über die besagte Distanz und stromaufwärts über dieselbe Distanz, und eine Antriebsvorrichtung (46) für das quer verlaufende Gitter zwischen einer abgesenkten Position im Anhäufungskanal, in der es die Gegenstände stromabwärts verschieben soll, und einer angehobenen Position über dem Anhäufungskanal, wobei der besagte Schieber entlang einer quer verlaufenden horizontalen Gelenkachse (38) auf dem Wagen (34) angelenkt ist, sodass er entweder in der angehobenen Position über dem Anhäufungskanal (11), in der er nicht in die Gegenstände eingreift, die im Anhäufungskanal (11) zirkulieren, oder in der abgesenkten Position im Anhäufungskanal (11) platziert werden kann, in der er in die Gegenstände eingreift, die sich in der hydraulischen Strömung befinden, die im Anhäufungskanal (11) zirkuliert, sodass für eine Überlagerung der Gegenstände in der Überlagerungszone gegen die geschlossene Vorrichtung zum Zurückhalten/ Freigeben gesorgt wird.

2. Vorrichtung nach Anspruch 1, **dadurch gekennzeichnet, dass** jeder motorisierte Schieber (37) ausgeführt ist, um die Gegenstände über eine Distanz stromabwärts zu bewegen, die kleiner ist, als die Länge der Überlagerungszone (18).

3. Vorrichtung nach einem der Ansprüche 1 oder 2, **dadurch gekennzeichnet, dass** jeder motorisierte Schieber (37) ausgeführt ist, um die Gegenstände über eine Distanz stromabwärts zu bewegen, die kleiner ist, als die Hälfte der Distanz, die ihn von der Vorrichtung (14) zum Zurückhalten/ Freigeben trennt.

4. Vorrichtung nach einem der Ansprüche 1 bis 3, **dadurch gekennzeichnet, dass** jeder motorisierte Schieber (37) ausgeführt ist, um permanent abwechselnd stromabwärts im Anhäufungskanal von einer stromaufwärts befindlichen ursprünglichen Position aus über einen vorbestimmten Bewegungshub für die Gegenstände, und außerhalb des Anhäufungskanals stromaufwärts angetrieben zu werden, um zur besagten stromaufwärts befindlichen ursprünglichen Position zurückzukehren.

5. Vorrichtung nach einem der Ansprüche 1 bis 4, **dadurch gekennzeichnet, dass** jeder motorisierte Schieber (37) im Verhältnis zum Anhäufungskanal in Längsrichtung verschiebbar ist und abwechselnd stromabwärts und stromaufwärts verschoben wird.

6. Vorrichtung nach einem der Ansprüche 1 bis 5, **dadurch gekennzeichnet, dass** sie eine Steuerungseinheit umfasst, die ausgeführt ist, um die Aktivierung des motorisierten Schiebers (37) zumindest dann anzusteuern, wenn sich die Vorrichtung (14) zum Zurückhalten/ Freigeben in der Schließposition befindet, in der sie die Gegenstände am stromabwärts befindlichen Ende des Anhäufungskanals (11) zurückhält, und solange die Anzahl der Gegenstände in der Überlagerungszone (18) kleiner oder gleich einer vorbestimmten Anzahl an Gegenständen ist, die einer Charge entspricht, die mehrere übereinander gestapelte Schichten zwischen dem motorisierten Schieber (37) und der Vorrichtung (14) zum Zurückhalten/ Freigeben umfasst.

7. Vorrichtung nach Anspruch 6, **dadurch gekennzeichnet, dass** die Steuerungseinheit ausgeführt ist, um die Aktivierung des motorisierten Schiebers (37) anzusteuern, wenn sich die Vorrichtung (14) zum Zurückhalten/ Freigeben in der offenen Position befindet, wobei es der Schieber ermöglicht, die Ausbringung der Gegenstände aus dem Anhäufungskanal zumindest in ihrer Anfangsphase zu unterstützen, und die in Ausbringung befindlichen Gegenstände von jenen zu trennen, die stromaufwärts ankommen und dazu bestimmt sind, eine andere Charge zu bilden.

8. Vorrichtung nach einem der Ansprüche 1 bis 7, **dadurch gekennzeichnet, dass** sie darüber hinaus einen hydraulischen Kanal umfasst, der Zulaufkanal (15) genannt wird, in Verbindung mit jedem Anhäufungskanal (11), sodass er die hydraulische Strömung und Gegenstände aufnehmen kann, die von der Vorrichtung (14) zum Zurückhalten/ Freigeben aus diesem Anhäufungskanal ausgebracht worden sind, und zumindest einen Posten (16) zur Aufnahme von Gegenstandschargen, die vom besagten Zulaufkanal (15) freigegeben wurden.

9. Vorrichtung nach einem der Ansprüche 1 bis 8, **dadurch gekennzeichnet, dass** die verschiedenen Anhäufungskanäle (11) parallel zueinander liegen, und dadurch, dass jede Kalibrierreihe (10) der Vorrichtung zur selektiven Zuführung zumindest in etwa orthogonal zu jedem Anhäufungskanal (11) steht.

10. Vorrichtung nach einem der Ansprüche 1 bis 9, **dadurch gekennzeichnet, dass** die Vorrichtung (14) zum Zurückhalten/ Freigeben und der motorisierte Schieber (37) für den hydraulischen Durchfluss, der im Anhäufungskanal (11) zirkuliert, transparent sind.

## Claims

1. Device for grouping into batches fragile floating objects, in particular floating fruits, comprising:
- a plurality of channels (11), named accumulation channels, which are connected to a hydraulic supply device which is adapted to form, in each accumulation channel, a hydraulic current which is capable of transporting the floating objects along the accumulation channel, each accumulation channel being provided, at a downstream end (13) thereof, with a device (14) for retaining/releasing the objects which it contains,
- a selective supply device (10) for supplying an upstream portion of each accumulation channel with objects, this selective supply device comprising at least one line, named a calibration line (10), for conveying, analyzing and sorting the objects in accordance with predetermined criteria, said calibration line comprising means for selective discharge of the objects in the different accumulation channels (11),
and wherein:
- each accumulation channel has, at least in a downstream portion thereof, named the stacking zone (18), a height which is greater than twice the maximum vertical spatial requirement of each object in order to be able to receive several layers of objects,
- each accumulation channel (11) is provided with a device (17), named a staking device, which is capable of staking the objects in several layers in the stacking zone (18),
**characterized in that** said staking device (17) of each accumulation channel comprises at least one motorized pushing member (37) which is arranged upstream of the stacking zone (18) and which is capable of moving in a downstream direction the objects which arrive at a location upstream of the stacking zone (18) of the accumulation channel, independently of the hydraulic current and over a distance which is less than the total distance which separates it from the retention/release device (14), but greater than a maximum spatial requirement of an object in the horizontal direction, comprising a transverse grid which is mounted on a carriage (34) which is movingly guided above the accumulation channel (11), a device (31) for longitudinally driving this carriage (34) alternately in a downstream direction over said distance, and in an upstream direction over the same distance, and a device (46) for driving the transverse grid between a position lowered in the accumulation channel in which it is capable of pushing the objects in a downstream direction, and a position raised above the accumulation channel, said pushing member is articulated to the carriage (34) along a transverse horizontal articulation axis (38) in order to be able to be placed either in a position raised above the accumulation channel (11) in which it does not interfere with the objects which are circulating in the accumulation channel (11), or in a position lowered into the accumulation channel (11) in which it interferes with the objects located in the hydraulic current circulating in the accumulation channel (11) in order to obtain stacking of the objects in the stacking zone against the closed retention/release device.

2. The device according to claim 1, **characterized in that** each motorized pushing member (37) is adapted to move the objects in a downstream direction over a distance which is less than the length of the stacking zone (18).

3. The device according to either claim 1 or claim 2, **characterized in that** each motorized pushing member (37) is adapted to move the objects in a downstream direction over a distance which is less than half of the distance separating it from the retention/release device (14).

4. The device according to one of claims 1 to 3, **characterized in that** each motorized pushing member (37) is adapted to be driven permanently alternately in a downstream direction in the accumulation channel from an initial upstream position over a predetermined movement path for the objects, and out of the accumulation channel in an upstream direction in order to return to said initial upstream position.

5. The device according to one of claims 1 to 4, **characterized in that** each motorized pushing member (37) is guided in longitudinal translation relative to the accumulation channel and is driven in translation alternately in a downstream and upstream direction.

6. The device according to one of claims 1 to 5, **characterized in that** it comprises a control unit which is adapted to control the activation of the motorized pushing member (37) at least when the retention/release device (14) is in a closed position in which it retains the objects at the downstream end of the accumulation channel (11), and as long as the number of objects in the stacking zone (18) is less than or equal to a predetermined number of objects corresponding to a batch comprising several layers staked one on the other between the motorized pushing member (37) and the retention/release device (14).

7. The device according to claim 6, **characterized in that** the control unit is adapted to control the activation of the motorized pushing member (37) when the retention/ release device (14) is in an open position, the pushing member allowing the discharge of the objects from the accumulation channel to be assisted, at least during the initial phase thereof, and the objects being discharged to be separated from those which arrive at an upstream location and which are intended to form another batch.

8. The device according to one of claims 1 to 7, **characterized in that** it further comprises a hydraulic channel, named a conveying channel (15), which is in communication with each accumulation channel (11) in order to be able to receive the hydraulic current and objects discharged by the retention/release device (14) from this accumulation channel, and at least one receiving station (16) for batches of objects supplied by said conveying channel (15).

9. The device according to one of claims 1 to 8, **characterized in that** the various accumulation channels (11) are parallel with each other and **in that** each calibration line (10) of the selective supply device is at least substantially orthogonal to each accumulation channel (11).

10. The device according to one of claims 1 to 9, **characterized in that** the retention/release device (14) and the motorized pushing member (37) are transparent with respect to the hydraulic flow rate circulating in the accumulation channel (11).
